# EUROPEAN PATENT SPECIFICATION

(11) **EP 2 663 459 B1**
(45) Date of publication and mention of the grant of the patent: **14.05.2014**
(21) Application number: 12703341.3
(22) Date of filing: 27.01.2012
(51) Int. Cl.: B60H 1/00, B60H 1/32

(54) **COOLING APPARATUS**
KÜHLVORRICHTUNG
APPAREIL DE REFROIDISSEMENT

(30) Priority: 04.02.2011 JP 2011022821
(43) Date of publication of application: 20.11.2013
(73) Proprietor: TOYOTA JIDOSHA KABUSHIKI KAISHA, Toyota-shi, Aichi-ken, 471-8571 (JP)
(72) Inventor: OHNO, Yuichi c/o NIPPON SOKEN INC.,, Aichi 445-0012 (JP); UCHIDA, Kazuhide c/o NIPPON SOKEN INC.,, Aichi 445-0012 (JP); KAWAKAMI, Yoshiaki c/o TOYOTA JIDOSHA KABUSHIKI KAISHA, Aichi-ken 471-8571 (JP); JOJIMA, Yuki c/o TOYOTA JIDOSHA KABUSHIKI KAISHA, Aichi-ken 471-8571 (JP); TAKAHASHI, Eizo c/o TOYOTA JIDOSHA KABUSHIKI KAISHA, Aichi-ken 471-8571 (JP); SATO, Kousuke c/o TOYOTA JIDOSHA KABUSHIKI KAISHA, Aichi-ken 471-8571 (JP)
(74) Representative: Intès, Didier Gérard André
(86) International application number: PCT/IB2012/000120
(87) International publication number: WO 2012/104696

(56) References cited:
- EP-A1- 2 072 296
- WO-A1-2009/062710
- DE-A1-102008 035 216

## Description

### BACKGROUND OF THE INVENTION

### 1. Field of the Invention

The invention relates to a cooling apparatus and, more particularly, to a cooling apparatus that cools a heat generation source by using a vapor compression type refrigeration cycle.

### 2. Description of Related Art

In recent years, electric motor-driven vehicles, such as hybrid vehicles, fuel cell vehicles, electric vehicles, etc., are drawing attention as a measure for environmental problems. In those vehicles, electrical appliances, such as electric motors, generators, inverter, converters, batteries, etc., generate heat in association with receiving or supplying electric power. Therefore, these electrical appliances need to be cooled. Document WO 2009/062710 A1, which is considered as the closest prior art, discloses a known cooling apparatus for a heat-generation source.

Japanese Patent Application Publication No. 2000-73763 (JP-A-2000-73763) discloses a cooling apparatus for a hybrid vehicle which includes a first cooling circuit that cools an engine cylinder head and a traction electric motor selectively or simultaneously, a second cooling circuit that cools an engine cylinder block, and a third cooling circuit that cools a heavy-current system control unit that drives and controls the traction motor.

The cooling apparatus described in Japanese Patent Application Publication No. 2000-73763 (JP-A-2000-73763) cools electrical component parts by using a system that circulates a cooling liquid between a heating element and a radiator, as in an ordinary vehicle in which only the engine is cooled. Such a system requires that a radiator for cooling the electrical component parts be newly provided, and therefore has a problem of low vehicle-mountability.

Therefore, there has been proposed a technology of cooling a heating element by utilizing a vapor compression type refrigeration cycle that is employed in a vehicle air-conditioner apparatus. For example, Japanese Patent Application Publication No. 2007-69733 (JP-A-2007-69733) discloses a system in which a heat exchanger that performs heat exchange with an air for use for air-conditioning and a heat exchanger that performs heat exchange with a heating element are disposed in parallel in a coolant passageway extending from an expansion valve to a compressor, and in which the heating element is cooled by utilizing the coolant for the air-conditioner apparatus. Besides, Japanese Patent Application Publication No. 2005-90862 (JP-A-2005-90862) discloses a cooling system in which a bypass passageway that bypasses a decompressor, an evaporator and a compressor of a refrigeration cycle for the air-conditioning is provided with heating element-cooling means for cooling a heating element.

In the above-described cooling apparatuses disclosed in Japanese Patent Application Publication No. 2007-69733 (JP-A-2007-69733) and Japanese Patent Application Publication No. 2005-90862 (JP-A-2005-90862), a cooling path for cooling heat generation sources, such as electrical appliances and the like, are incorporated into the vapor compression type refrigeration cycle, and when the heat generation sources are cooled, the entire amount of the coolant in the refrigeration cycle is introduced into the cooling path provided for cooling the heat generation sources. Therefore, the related-art apparatuses have problems of the over-cooling of a heat generation source, increased pressure loss in association with passage of the coolant, increased electric power consumption of the compressor, among other problems.

### SUMMARY OF THE INVENTION

The invention provides a cooling apparatus that is able to prevent over-heating of a heat generation source and makes it possible to reduce the pressure loss and reduce the electric power consumption of the compressor.

A cooling apparatus of a first aspect of the invention relates to a cooling apparatus that cools a heat generation source. This cooling apparatus includes: a compressor that circulates a coolant; a condenser that condenses the coolant; a decompressor that decompresses the coolant that has been condensed by the condenser; an evaporator that evaporates the coolant that has been decompressed by the decompressor; a first passageway through which the coolant that moves from an outlet of the condenser toward an inlet of the decompressor flows and which includes a passageway-forming portion that forms a portion of the first passageway; and a second passageway which is connected in parallel with the passageway-forming portion, and which is provided with the heat generation source, and in which the coolant flows via the heat generation source.

The cooling apparatus may further include a flow control valve that is disposed on the passageway-forming portion and that adjusts amount of flow of the coolant flowing through the passageway-forming portion and the amount of flow of the coolant flowing through the second passageway.

The cooling apparatus may further include: a third passageway through which the coolant that moves from an outlet of the compressor toward an inlet of the condenser flows; and a communication passageway that provides communication between the third passageway and a downstream side of the second passageway relative to the heat generation source. The cooling apparatus may further include a switching valve that switches state of communication between the downstream side of the second passageway relative to the heat generation source and each of the first passageway and the third passageway. In the cooling apparatus, the heat generation source may be disposed below the condenser.

The cooling apparatus may further include another condenser disposed on the first passageway, and the passageway-forming portion may be provided between the condenser and the another condenser. In the cooling apparatus, the condenser may be higher in heat release capability of releasing heat from the coolant than the another condenser

The cooling apparatus may further include a fan that blows air to the condenser.

A cooling apparatus of a second aspect of the invention relates to a cooling apparatus that refrigerates a heat generation source. This cooling apparatus includes: a compressor that circulates a coolant on a circulation path; a condenser that condenses the coolant on the circulation path; a decompressor that decompresses, on the circulation path, the coolant that has been condensed by the condenser; an evaporator that evaporates, on the circulation path, the coolant that has been decompressed by the decompressor; a first passageway which is a portion of the circulation path, and through which the coolant that moves from an outlet of the condenser toward an inlet of the decompressor flows, and which includes a passageway-forming portion as a portion of the first passageway; and a second passageway which is connected in parallel with the passageway-forming portion, and which is provided with the heat generation source, and in which the coolant flows via the heat generation source.

According to the cooling apparatuses of the first and second aspects of the invention, the over-cooling of the heat generation source can be prevented, and the pressure loss and the electric power consumption of the compressor can be reduced.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram showing a construction of a cooling apparatus in accordance with a first embodiment of the invention;
FIG. 2 is a Mollier diagram showing states of a coolant in a vapor compression type refrigeration cycle in the first embodiment;
FIG. 3 is a diagram schematically showing a control of the opening degree of a flow control valve;
FIG 4 is a schematic diagram showing a construction of a cooling apparatus in accordance with a second embodiment of the invention;
FIG. 5 is a Mollier diagram showing states of a coolant in a vapor compression type refrigeration cycle in the second embodiment;
FIG 6 is a schematic diagram showing a construction of a cooling apparatus in accordance with a third embodiment of the invention;
FIG. 7 is a schematic diagram showing the flow of the coolant that cools an HV appliance heat source during the operation of the vapor compression type refrigeration cycle;
FIG. 8 is a schematic diagram showing the flow of the coolant that cools the HV appliance heat source during a stop of the vapor compression type refrigeration cycle;
FIG 9 is a schematic diagram showing a construction of a cooling apparatus in accordance with a fourth embodiment of the invention;
FIG 10 is a schematic diagram showing a construction of a cooling apparatus in accordance with a fifth embodiment of the invention, and showing the flow of a coolant that cools an HV appliance heat source while a vapor compression type refrigeration cycle is in operation; and
FIG. 11 is a schematic diagram showing the cooling apparatus of the fifth embodiment, and showing the flow of the coolant that cools the HV appliance heat source during a stop of the vapor compression type refrigeration cycle.

### DETAILED DESCRIPTION OF EMBODIMENTS

Embodiments of the invention will be described hereinafter with reference to the drawings. The same or like portions are denoted by the same reference characters in the drawings, and will not be repeatedly described below.

### (FIRST EMBODIMENT)

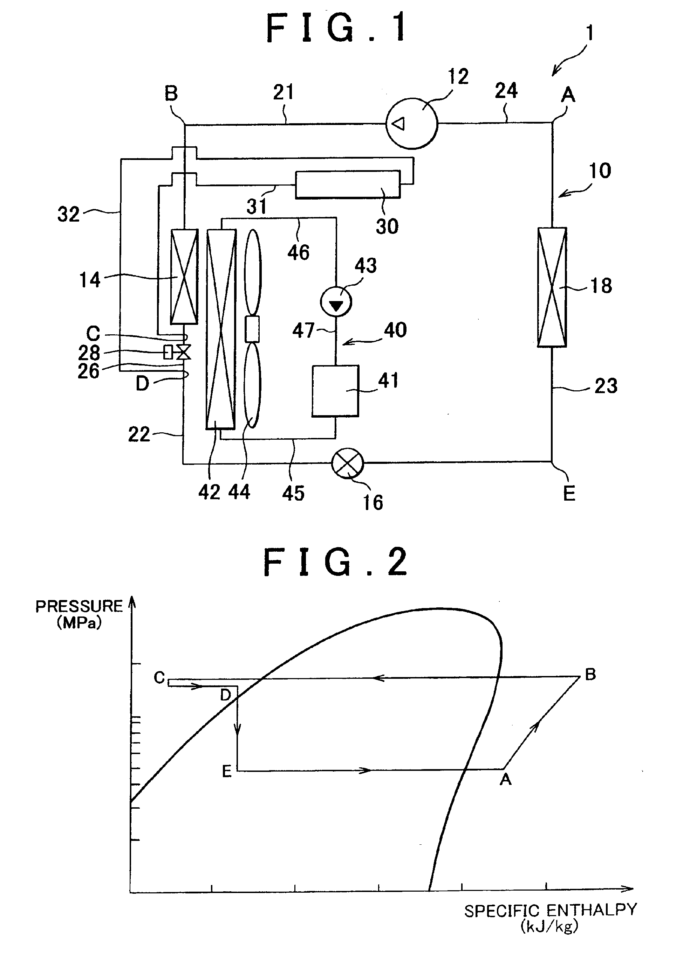

FIG 1 is a schematic diagram showing a construction of a cooling apparatus 1 in accordance with a first embodiment of the invention. As shown in FIG. 1, the cooling apparatus 1 includes a vapor compression type refrigeration cycle 10. The vapor compression type refrigeration cycle 10 is mounted in a vehicle for the purpose of, for example, cooling the air in the cabin of the vehicle. The air-cooling through the use of the vapor compression type refrigeration cycle 10 is performed, for example, in the case where a switch for the air-cooling is turned on, or in the case where an automatic control mode of automatically adjusting the temperature inside the cabin of the vehicle so that the cabin temperature becomes equal to a set temperature has been selected and where the temperature in the cabin is higher than the set temperature.

The vapor compression type refrigeration cycle 10 includes a compressor 12, a condenser 14, an expansion valve 16 as an example of the decompressor, and an evaporator 18. The vapor compression type refrigeration cycle 10 also includes: a coolant passageway 21 as a third passageway that provides communication between the compressor 12 and the condenser 14; a coolant passageway 22 as a first passageway that provides communication between the condenser 14 and the expansion valve 16; a coolant passageway 23 that provides communication between the expansion valve 16 and the evaporator 18, and a coolant passageway 24 that provides communication between the evaporator 18 and the compressor 12. The vapor compression type refrigeration cycle 10 is constructed of the compressor 12, the condenser 14, the expansion valve 16 and the evaporator 18 that are linked by the coolant passageways 21 to 24.

The compressor 12 operates by using as a power source an electric motor or an engine mounted in the vehicle, and adiabatically compresses a coolant gas to a superheated coolant gas. The compressor 12, when in operation, sucks and compresses a gas-phase coolant that flows from the condenser 18 through the coolant passageway 24, and discharges the compressed coolant into the coolant passageway 21. The compressor 12 circulates the coolant in the vapor compression type refrigeration cycle 10 by discharging the coolant into the coolant passageway 21.

The condenser 14 causes the superheated coolant gas compressed by the compressor 12 to isobarically release heat to an external medium, and thereby changes it into a coolant liquid. The gas-phase coolant discharged from the compressor 12 condenses (liquefies) in the condenser 14 as it cools by releasing heat to the surroundings. The condenser 14 includes a tube that conveys the coolant, and fins for performing heat exchange between the coolant flowing within the tube and the air around the condenser 14. The condenser 14 performs heat exchange between the coolant and cooling wind that is supplied by natural ventilation that is caused by the traveling of the vehicle. Due to the heat exchange performed by the condenser 14, the temperature of the coolant drops and the coolant liquefies.

Specifications of the condenser 14 (i.e., the size or heat release capability of the condenser 14) are determined so that the temperature of the liquid-phase coolant having passed through the condenser 14 is lower than a temperature that is needed for the air-cooling of the cabin. The specifications of the condenser 14 are determined so as to provide an amount of heat release that is larger than that of a condenser provided in a vapor compression type refrigeration cycle that does not cool an HV appliance heat source 30 (described later) by the amount of heat that the coolant is assumed to receive from the HV appliance heat source 30. The cooling apparatus 1 equipped with the condenser 14 having the foregoing specifications is able to properly cool the HV appliance heat source 30 while maintaining the capability of air-cooling the cabin of the vehicle, without a need to increase the power of the compressor 12.

The expansion valve 16 jets from small holes the high-pressure liquid-phase coolant that flows in the coolant passageway 22, so that the coolant expands and changes into a low-temperature and low-pressure atomized coolant. The expansion valve 16 changes the coolant liquid condensed by the condenser 14 into a wet vapor in a gas-liquid mixture state through decompression. Incidentally, the decompressor for decompressing the coolant liquid that flows in the coolant passageway 22 is not limited to the expansion valve 16 that throttles or regulates the flow and causes expansion of the coolant, but may also be capillary tubes.

The evaporator 18 allows the atomized coolant flowing therein to vaporize, and therefore absorbs heat from the ambient air that is introduced so as to contact the evaporator 18. Using the coolant decompressed by the expansion valve 16, the evaporator 18 obtains the heat of vaporization needed for the wet vapor of the coolant to vaporize to become a coolant gas from the air in the cabin of the vehicle as a part to be cooled, and thereby performs the air-cooling of the cabin of the vehicle. The cooling of air in the cabin of the vehicle is carried out as the air whose temperature has dropped due to the heat absorption to the evaporator 18 is returned into the cabin of the vehicle. The coolant in the evaporator 18 absorbs heat from the ambient and therefore is heated.

The evaporator 18 includes a tube that conveys the coolant, and fins for performing heat exchange between the coolant flowing in the tube and the air around the evaporator 18. Within the tube, the coolant in the wet-vapor state flows. When the coolant flows in the tube, the coolant evaporates by absorbing heat from the air in the cabin of the vehicle as evaporative latent heat through the fins, and then becomes superheated vapor due to sensible heat. The vaporized coolant then flows to the compressor 12 through the coolant passageway 24. The compressor 12 compresses the coolant that flows from the evaporator 18.

The coolant passageway 21 is a passageway for conveying the coolant from the compressor 12 to the condenser 14. The coolant flows from an outlet of the compressor 12 toward an inlet of the condenser 14 through the coolant passageway 21. The coolant passageway 22 is a passageway for conveying the coolant from the condenser 14 to the expansion valve 16. The coolant flows from an outlet of the condenser 14 toward an inlet of the expansion valve 16 through the coolant passageway 22. The coolant passageway 23 is a passageway for conveying the coolant from the expansion valve 16 to the evaporator 18. The coolant flows from an outlet of the expansion valve 16 toward an inlet of the evaporator 18 through the coolant passageway 23. The coolant passageway 24 is a passageway for conveying the coolant from the evaporator 18 to the compressor 12. The coolant flows from an outlet of the evaporator 18 toward an inlet of the compressor 12 through the coolant passageway 24.

In the vapor compression type refrigeration cycle 10, the coolant flows so as to pass a point A, a point B, a point C, a point D and a point E shown in FIG. 1 in that order, and thus the coolant circulates through the compressor 12, the condenser 14, the expansion valve 16 and the evaporator 18. The coolant circulates in the vapor compression type refrigeration cycle 10, passing through a coolant circulation flow path in which the compressor 12, the condenser 14, the expansion valve 16 and the evaporator 18 are sequentially connected by the coolant passageways 21 to 24.

Incidentally, the coolant for use in the vapor compression type refrigeration cycle 10 may be, for example, carbon dioxide, a hydrocarbon, such as propane, isobutane, etc., ammonia, water, etc.

The coolant passageway 22 that conveys the coolant flowing from the condenser 14 toward the expansion valve 16 includes a passageway-forming portion 26. The passageway-forming portion 26 forms a portion of the coolant passageway 22. The point C shown in FIG. 1 indicates an upstream-side end portion of the passageway-forming portion 26, that is, an end portion of the passageway-forming portion 26 which is at a side close to the condenser 14. The point D shown in FIG. 1 indicates a downstream-side end portion of the passageway-forming portion 26, that is, an end portion of the passageway-forming portion 26 which is at a side close to the expansion valve 16.

The cooling apparatus 1 is equipped with another coolant passageway that is connected in parallel with the passageway-forming portion 26. This other passageway includes coolant passageways 31 and 32 as a second passageway. The coolant that flows through the coolant passageways 31 and 32 flows via the HV (hybrid vehicle) appliance heat source 30 as a heat generation source, and takes heat from the HV appliance heat source 30 and therefore cools the HV appliance heat source 30. The coolant passageway 31 is a passageway for conveying the coolant from the point C to the HV appliance heat source 30. The coolant passageway 32 is a passageway for conveying the coolant from the HV appliance heat source 30 to the point D. The coolant flows from the point C toward the HV appliance heat source 30 through the coolant passageway 31, and flows from the HV appliance heat source 30 toward the point D through the coolant passageway 32. The point C is a branch point between the coolant passageway 22 and the coolant passageway 31. The point D is a branch point between the coolant passageway 22 and the coolant passageway 32.

The HV appliance heat source 30 includes electrical appliances that generate heat due to giving or receiving electric power. The electrical appliances include at least one of an inverter for converting direct-current power to alternating-current power, a motor-generator that is a rotary electric machine, a battery that is an electricity storage device, a converter that increases the voltage of a battery, a DC/DC converter for reducing the voltage of a battery, etc. The battery is a secondary battery such as a lithium-ion battery, a nickel metal hydride battery, etc. A capacitor may also be used instead of the battery.

FIG. 2 is a Mollier diagram showing states of the coolant in the vapor compression type refrigeration cycle 10 in the first embodiment. In FIG. 2, the horizontal axis shows the specific enthalpy (unit: kJ/kg) of the coolant, and the vertical axis shows the absolute pressure (unit: MPa) of the coolant. A curve in the diagram is a combination of a saturation vapor line and a saturation liquid line. FIG. 2 also shows thermodynamic states of the coolant at various points (i.e., the points A, B, C, D and E) in the vapor compression type refrigeration cycle 10 in which the coolant flows from the coolant passageway 22 extending from the outlet of the condenser 14 into the coolant passageway 31 via the point C, cools the HV appliance heat source 30, and returns therefrom through the coolant passageway 32, via the point D, into the coolant passageway 22 extending to the inlet of the expansion valve 16.

As shown in FIG. 2, the coolant in the superheated vapor state having been sucked into the compressor 12 (point A) is adiabatically compressed along an isoline of specific entropy by the compressor 12. As the coolant is compressed, the pressure and the temperature of the coolant increase so that the coolant becomes a high-temperature and high-pressure superheated vapor with a large degree of superheat (point B). Then, the coolant flows to the condenser 14. The high-pressure coolant vapor, after entering the condenser 14, is cooled in the condenser 14 so that the coolant isobarically changes from the superheated vapor to a dry saturated vapor, and gradually liquefies so as to become a wet vapor in the gas-liquid mixture state while releasing latent condensation heat. Then, as the entire amount of the coolant condenses, the coolant becomes a saturated liquid, and then releases sensible heat to become a supercooled liquid (point C).

The liquefied coolant flows from the point C into the HV appliance heat source 30 through the coolant passageway 31, and cools the HV appliance heat source 30. Due to the heat exchange between the coolant and the HV appliance heat source 30, the degree of supercooling lessens. That is, the temperature of the coolant in the supercooled liquid state rises and approaches a saturation temperature of the liquid coolant (point D). After that, the coolant flows into the expansion valve 16. At the expansion valve 16, the coolant in the supercooled liquid state is throttled and expanded, so that while the specific enthalpy remains unchanged, the temperature and the pressure of the coolant drop, resulting in a wet vapor in a low-temperature and low-pressure gas-liquid mixed state (point E).

The coolant in the wet-vapor state having come out of the expansion valve 16 then enters the evaporator 18, in which the coolant absorbs heat from outside as evaporative latent heat so as to isobarically evaporate to become a dry saturated vapor. Furthermore, the temperature of the coolant vapor further rises due to sensible heat to become a superheated vapor (point A), and then is sucked into the compressor 12. Following this cycle, the coolant continuously repeats the changes in state in which it is compressed, condensed, throttled-expanded, and evaporated.

Incidentally, although in the foregoing description of the vapor compression type refrigeration cycle, the theoretical refrigeration cycle is described, it is a matter of course that in the vapor compression type refrigeration cycle 10 in real it is necessary to consider the loss related to the compressor 12, and the pressure loss and the heat loss of the coolant.

When the vapor compression is in operation, the coolant in the evaporator 18 absorbs heat of vaporization from the air in the cabin of the vehicle, and thus carrying out the air-cooling of the cabin. Moreover, the high-pressure liquid coolant from the condenser 14 forks at the point C, and a portion of the coolant flows to the HV appliance heat source 30, and undergoes heat exchange with the HV appliance heat source 30 and therefore cools the HV appliance heat source 30. The cooling apparatus 1 cools the HV appliance heat source 30, which is a heat generation source mounted in the vehicle, by utilizing the vapor compression type refrigeration cycle 10 provided for the air-conditioning of the cabin of the vehicle.

As paths that convey the coolant from the outlet of the condenser 14 toward the inlet of the expansion valve 16, the coolant passageway 31 and 32 that is a path that passes via the HV appliance heat source 30 and the passageway-forming portion 26 that is a path that does not pass via the HV appliance heat source 30 are provided in parallel. Therefore, only a portion of the coolant that flows out of the condenser 14 flows to the HV appliance heat source 30. An amount of the coolant that is needed in order to cool the HV appliance heat source 30 is caused to flow through the coolant passageways 31 and 32, so that the HV appliance heat source 30 is appropriately cooled. Therefore, the over-cooling of the HV appliance heat source 30 can be prevented. Since not the entire amount of the coolant flows to the HV appliance heat source 30, the pressure loss related to the passage of the coolant through the coolant passageways 31 and 32 can be reduced, and accordingly the electric power that needs to be consumed in order to operate the compressor 12 for circulating the coolant can be reduced.

The coolant is cooled in the condenser 14 until it becomes a supercooled liquid. Then, the coolant receives sensible heat from the HV appliance heat source 30, and is thereby heated to a temperature that is slightly below the saturation temperature. After that, as the coolant passes through the expansion valve 16, the coolant becomes a low-temperature and low-pressure wet vapor. At the outlet of the expansion valve 16, the coolant has a temperature and a pressure that are basically needed for the air-cooling of the cabin of the vehicle. As for the condenser 14, its heat release capability is determined to such a degree as to allow the coolant to be sufficiently cooled.

If the low-temperature and low-pressure coolant having passed through the expansion valve 16 is used to cool the HV appliance heat source 30, the capability of the evaporator 18 to cool the air in the cabin decreases, and the air-cooling capability for the cabin declines. In the cooling apparatus 1 in this embodiment, on the other hand, the coolant is cooled to a sufficiently supercooled state in the condenser 14, and the high-pressure coolant at the outlet of the condenser 14 is used to cool the HV appliance heat source 30. Therefore, the HV appliance heat source 30 can be cooled without affecting the air-cooling capability of cooling the air in the cabin. Incidentally, it is desirable that the temperature needed in order to cool the HV appliance heat source 30 be at least lower than an upper-limit value of a temperature range that is targeted as the temperature range of the HV appliance heat source 30.

Referring back to FIG. 1, the cooling apparatus 1 is equipped with an engine cooling system 40 for cooling the engine mounted in the vehicle. The engine cooling system 40 includes an engine 41 for generating drive force of the vehicle, a radiator 42 that carries out heat exchange between cooling wind and a cooling liquid, a pump 43 that circulates the cooling liquid, and a radiator fan 44 that delivers cooling wind to the radiator 42. The engine cooling system 40 also includes a piping system 45 that links the engine 41 and the radiator 42, and a piping system 46 that links the radiator 42 and the pump 43, and a piping system 47 that links the pump 43 and the engine 41.

When the pump 43 activates, the cooling liquid is sent from the pump 43 to the engine 41 through the piping system 47. Due to the heat exchange between the engine 41 and the cooling liquid, the engine 41 cools and the temperature of the cooling liquid rises. The cooling liquid whose temperature has risen is sent to the radiator 42 through the piping system 45. Since the radiator fan 44 disposed adjacent to the radiator 42 is activated to blow air to the radiator 42, the cooling liquid in the radiator 42 cools by releasing heat to air. In the radiator 42 provided for cooling the cooling liquid heated by the engine 41, heat exchange occurs between the cooling liquid and the cooling wind that is produced by activation of the radiator fan 44, so that the temperature of the cooling liquid decreases. The cooling liquid having a reduced temperature returns to the pump 43 through the piping system 46.

As shown in FIG. 1, the radiator 42 of the engine cooling system 40 is disposed adjacent to the condenser 14 of the vapor compression type refrigeration cycle 10. The condenser 14, the radiator 42 and the radiator fan 44 are disposed in a line so that the radiator 42 is interposed between the radiator fan 44 and the condenser 14. The radiator fan 44 blows air to the radiator 42 to cool the cooling liquid that circulates in the engine cooling system 40, and simultaneously blows air to the condenser 14 and thus air-cools the condenser 14. The cooling apparatus 1 further includes the radiator fan 44 that blows air to the condenser 14.

Since the radiator fan 44 air-cools the condenser 14 by blowing air thereto, the heat exchange between the coolant in the condenser 14 and the cooling wind supplied by the radiator fan 44 occurs in addition to the heat exchange between the coolant and fresh air stream introduced into the traveling vehicle. This accelerates the heat exchange in the condenser 14, and effectively lowers the temperature of the coolant and therefore liquefies the coolant. Furthermore, this causes the coolant in the condenser 14 to efficiently release heat, so that the capability of the condenser 14 to cool the coolant will improve. Therefore, the efficiency of the air-cooling of the cabin of the vehicle performed through the use of the vapor compression type refrigeration cycle 10 and the efficiency of the cooling of the HV appliance heat source 30 through the use of the vapor compression type refrigeration cycle 10 can be further improved.

Since the radiator fan 44 of the engine cooling system 40 is used as a fan for air-cooling the condenser 14, there is no need to add a new fan. Therefore, the heat release capability of the condenser 14 can be improved without increasing the cost of the cooling apparatus 1.

The cooling apparatus 1 is further equipped with a flow control valve 28. The flow control valve 28 is provided on the coolant passageway 22 that extends from the condenser 14 toward the expansion valve 16. The flow control valve 28 is connected to the passageway-forming portion 26 that forms a portion of the coolant passageway 22. The flow control valve 28 arbitrarily adjusts the amount of flow of the coolant that flows through the passageway-forming portion 26 and the amount of flow of the coolant that flows through the coolant passageways 31 and 32, by changing the degree of opening of the valve 28 so as to increase or decrease the pressure loss of the coolant that flows through the passageway-forming portion 26.

For example, if the flow control valve 28 is completely closed to a valve opening degree of 0%, the entire amount of the coolant that flows out of the condenser 14 flows from the point C into the coolant passageway 31. If the valve opening degree of the flow control valve 28 is increased, the amount of flow of the coolant that flows directly into the expansion valve 16 through the passageway-forming portion 26, of the amount of flow of the coolant that flows from the condenser 14 into the coolant passageway 22, increases, and the amount of flow of the coolant that flows through the coolant passageways 31 and 32 and that therefore cools the HV appliance heat source 30 decreases. If the valve opening degree of the flow control valve 28 is decreased, the amount of flow of the coolant that flows directly into the expansion valve 16 through the passageway-forming portion 26, of the amount of flow of the coolant that flows from the condenser 14 into the coolant passageway 22, decreases, and the amount of flow of the coolant that flows through the coolant passageways 31 and 32 and that therefore cools the HV appliance heat source 30 increases.

If the valve opening degree of the flow control valve 28 is increased, the amount of flow of the coolant that cools the HV appliance heat source 30 decreases, so that the capability of cooling the HV appliance heat source 30 declines. If the valve opening degree of the flow control valve 28 is decreased, the amount of flow of the coolant that cools the HV appliance heat source 30 increases, so that the capability of cooling the HV appliance heat source 30 improves. Since the amount of the coolant that flows to the HV appliance heat source 30 can be optimally adjusted by using the flow control valve 28, the over-cooling of the HV appliance heat source 30 can be certainly prevented, and, in addition, the pressure loss related to the passage of the coolant through the coolant passageways 31 and 32 and the electric power consumption of the compressor 12 for circulating the coolant can be certainly reduced.

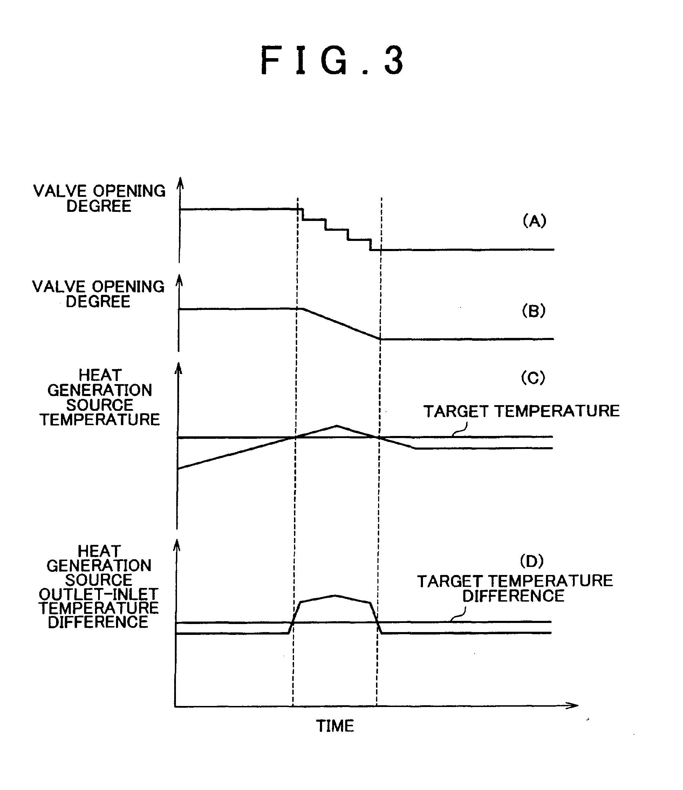

An example of a control in accordance with the adjustment of the valve opening degree of the flow control valve 28 will be described below. FIG. 3 is a diagram schematically showing a control of the opening degree of the flow control valve 28. In FIG. 3, the horizontal axis for graphs (A) to (D) shows time. The vertical axis in the graph (A) shows the valve opening degree in the case where the flow control valve 28 is an electric expansion valve that uses a stepping motor. The vertical axis in the graph (B) shows the valve opening degree in the case where the flow control valve 28 is a temperature type expansion valve that operates in the opening and closing direction in response to changes in temperature. The vertical axis in the graph (C) shows the temperature of the HV appliance heat source 30. The vertical axis in the graph (D) shows the temperature difference between the outlet and inlet of the HV appliance heat source 30.

As the coolant flows through the coolant passageways 31 and 32, the HV appliance heat source 30 is cooled. The adjustment of the valve opening degree of the flow control valve 28 is performed, for example, by monitoring the temperature of the HV appliance heat source 30, or the temperature difference between the outlet temperature and the inlet temperature of the HV appliance heat source 30. For example, with reference to the graph (C), a temperature sensor that continuously measures the temperature of the HV appliance heat source 30 is provided, and the temperature of the HV appliance heat source 30 is monitored. Alternatively, for example, with reference to the graph (D), a temperature sensor that measures the inlet temperature and the outlet temperature of the HV appliance heat source 30 is provided, and the temperature difference between the outlet and the inlet of the HV appliance heat source 30 is monitored.

If the temperature of the HV appliance heat source 30 exceeds a target temperature or the temperature difference between the outlet and the inlet of the HV appliance heat source 30 exceeds a target temperature difference (e.g., 3 to 5°C), the opening degree of the flow control valve 28 is decreased as shown in the graphs (A) and (B). Since the amount of flow of the coolant that flows to the HV appliance heat source 30 through the coolant passageway 31 is increased by reducing the opening degree of the flow control valve 28 as described above, the HV appliance heat source 30 can be more effectively cooled. In consequence, the temperature of the HV appliance heat source 30 will decline to become equal to or less than the target temperature as shown in the graph (C), or the temperature difference between the outlet and the inlet of the HV appliance heat source 30 can be decreased to become equal to or less than the target temperature difference as shown in the graph (D).

In this manner, by optimally adjusting the valve opening degree of the flow control valve 28, the amount of the coolant that brings about the heat release capability that is needed in order to keep the temperature of the HV appliance heat source 30 in an appropriate temperature range can be secured, and thus the HV appliance heat source 30 can be appropriately cooled. Therefore, the occurrence of a trouble in which the HV appliance heat source 30 becomes overheated and damaged can be certainly curbed.

### (SECOND EMBODIMENT)

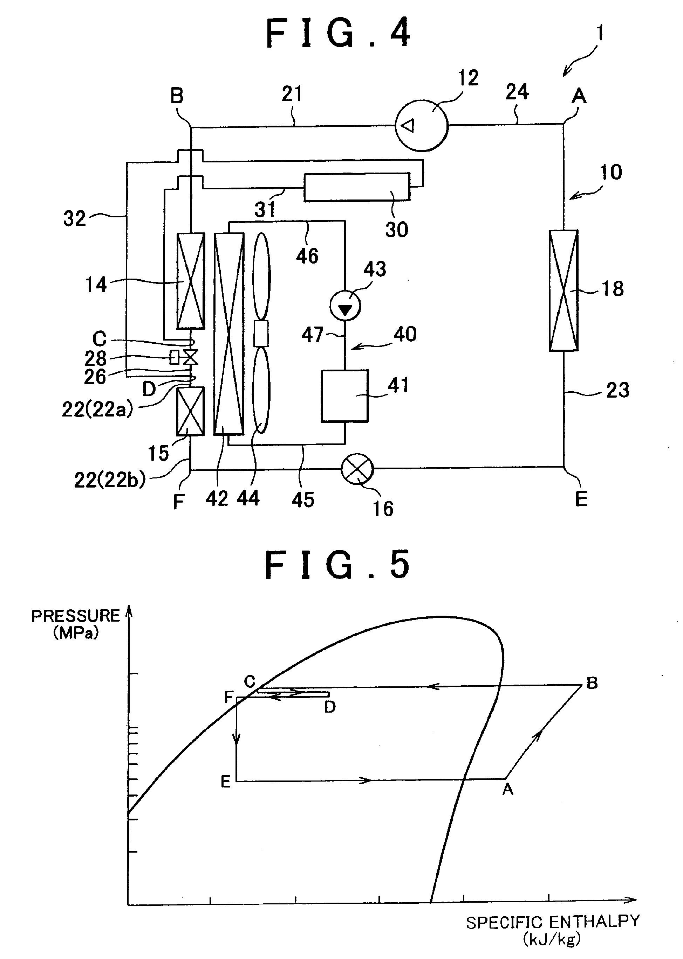

FIG. 4 is a schematic diagram showing a construction of a cooling apparatus 1 in accordance with a second embodiment of the invention. The cooling apparatus 1 of the second embodiment is different from that of the first embodiment in that a condenser 15 as another condenser that is different from the condenser 14 is disposed in the coolant passageway 22 that links the condenser 14 and the expansion valve 16.

The cooling apparatus 1 of the second embodiment is equipped with the condenser 14 as a first condenser, and the condenser 15 as a second condenser. Since the condenser 15 is provided, the coolant passageway 22 is divided into a coolant passageway 22a on an upstream side (a side closer to the condenser 14) of the condenser 15, and a coolant passageway 22b on a downstream side (a side closer to the expansion valve 16) of the condenser 15. In the vapor compression type refrigeration cycle 10, the high-pressure coolant discharged from the compressor 12 is condensed by both the condenser 14 and the condenser 15.

A passageway-forming portion 26 that forms a portion of the coolant passageway 22 is provided in the coolant passageway 22a between the condenser 14 and the condenser 15. A cooling system for the HV appliance heat source 30 which includes the coolant passageways 31 and 32 is disposed in parallel with the passageway-forming portion 26. A path of the coolant flowing from the condenser 14 directly to the condenser 15 and a path of the coolant flowing from the condenser 14 to the condenser 15 via the HV appliance heat source 30 are provided in parallel, and only a portion of the coolant is caused to flow through the coolant passageways 31 and 32. In this manner, the pressure loss occurring when the coolant flows in the cooling system of the HV appliance heat source 30 can be reduced.

FIG. 5 is a Mollier diagram showing states of the coolant in a vapor compression type refrigeration cycle 10 in the second embodiment. The horizontal axis in FIG. 5 shows the specific enthalpy (unit: kJ/kg) of the coolant, and the vertical axis shows the absolute pressure (unit: MPa) of the coolant. A curve in the diagram is a combination of a saturation vapor line and and a saturation liquid line. FIG. 5 also shows thermodynamic states of the coolant at various points (i.e., the points A, B, C, D, E and F) in the vapor compression type refrigeration cycle 10 in which the coolant flows from the coolant passageway 22a extending from the outlet of the condenser 14 into the coolant passageway 31 via the point C and cools the HV appliance heat source 30, and returns therefrom through the coolant passageway 32, via the point D, into the coolant passageway 22a extending to the inlet of the condenser 15.

The vapor compression type refrigeration cycle 10 in the second embodiment is the same as that in the first embodiment, except a system extending from the condenser 14 to the expansion valve 16. That is, the states of the coolant from the point D to the point B via the the points E and A in the Mollier diagram shown in FIG. 2 and the states of the coolant from the point F to the point B via the points E and A in the Mollier diagram shown in FIG. 5 are the same. Therefore, the states of the coolant from the point B to the point F, which are peculiar to the vapor compression type refrigeration cycle 10 of the second embodiment, will be described below.

The coolant in the high-temperature and high-pressure superheated vapor state having been adiabatically compressed by the compressor 12 (point B) is cooled by the condenser 14. The coolant isobarically releases sensible heat to change from the superheated vapor to a dry saturated vapor, and gradually liquefies to become a wet vapor in a gas-liquid mixture state while releasing latent condensation heat. Then, the entire amount of the coolant condenses to become a saturated liquid (point C).

The coolant in the saturated liquid state having flown out of the condenser 14 flows from the point C to the HV appliance heat source 30 through the coolant passageway 31. The HV appliance heat source 30 releases heat to the coolant that has passed through the condenser 14 and therefore has been condensed by the condenser 14. Thus, the HV appliance heat source 30 is cooled. Due to the heat exchange with the HV appliance heat source 30, the coolant is heated, so that the degree of dryness of the coolant increases. The coolant partly vaporizes by receiving latent heat from the HV appliance heat source 30, and thus becomes a wet vapor in which the saturated liquid and the saturated vapor are mixed (point D).

After that, the coolant flows into the condenser 15. The wet vapor of the coolant is re-condensed by the condenser 15. As the entire amount of the coolant condenses, the coolant becomes a saturated liquid, and then becomes a supercooled liquid (point F) that is supercooled by releasing sensible heat. After that, as the coolant passes through the expansion valve 16, the coolant becomes a low-temperature and low-pressure wet vapor (point E).

Because the condenser 15 sufficiently cools the coolant, the coolant at the outlet of the expansion valve 16 has a temperature and a pressure that are basically needed in order to air-cool the cabin of the vehicle. Therefore, the amount of heat that the coolant receives from outside at the time of evaporating in the evaporator 18 can be made sufficiently large. Thus, since the heat release capability of the condenser 15 that allows the sufficient cooling of the coolant is set, the HV appliance heat source 30 can be cooled without affecting the air-cooling capacity of cooling the air in the cabin. Hence, both the cooling capacity for the HV appliance heat source 30 and the air-cooling capacity for the cabin can be certainly secured.

In the vapor compression type refrigeration cycle 10 in the first embodiment, the condenser 14 is disposed between the compressor 12 and the expansion valve 16, so that the condenser 14 needs to cool the coolant further from the saturated liquid state until the coolant has a predetermined degree of supercooling. If the coolant in the supercooled liquid state is cooled, the temperature of the coolant approaches the atmosphere temperature and therefore the cooling efficiency for the coolant declines, so that the capacity of the condenser 14 needs to be increased. This will result in a problem of the condenser 14 having an increased size and becoming disadvantageous as a component of the cooling apparatus 1 that is to be mounted in a vehicle. On the other hand, if the condenser 14 is reduced in size for the mountability in a vehicle, the heat release capability of the condenser 14 also reduces, so that there arises a risk of failing to achieve a sufficiently low temperature of the coolant at the outlet of the expansion valve 16 and therefore resulting in an insufficient air-cooling capability for the cabin.

In contrast, in the vapor compression type refrigeration cycle 10 in the second embodiment, the two condensers 14 and 15 are disposed between the compressor 12 and the expansion valve 16, and the cooling system for the HV appliance heat source 30 is provided between the condenser 14 and the condenser 15. Therefore, the condenser 14 needs only to cool the coolant to the saturated liquid state as shown in FIG. 5. The coolant in the wet-vapor state that has partly vapored by receiving evaporative latent heat from the HV appliance heat source 30 is re-condensed in the condenser 15. The coolant changes in state at a constant temperature until the coolant in the wet-vapor state completely condenses to the saturated liquid. The condenser 15 further cools the coolant approximately to a degree of supercooling that is needed for the air-cooling of the cabin of the vehicle. Therefore, in comparison with the first embodiment, there is no need to increase the degree of supercooling of the coolant, and the capacities of the condensers 14 and 15 can be reduced. Hence, the sizes of the condensers 14 and 15 can be reduced, making it possible to provide the small-size cooling apparatus 1 that is advantageous in the mounting in a vehicle.

The coolant that flows from the condenser 14 to the HV appliance heat source 30 is heated by receiving heat from the HV appliance heat source 30 when cooling the HV appliance heat source 30. If the coolant heated at the HV appliance heat source 30 should vaporize, the amount of heat exchange between the coolant and the HV appliance heat source 30 will decrease so that the HV appliance heat source 30 cannot be sufficiently cooled, and the pressure loss at the time of the coolant passing in the piping system will increase. Therefore, it is desirable to sufficiently cool the coolant in the condenser 14 to such a degree that the coolant will not vaporize after cooling the HV appliance heat source 30.

Concretely, the state of the coolant at the outlet of the condenser 14 is caused to be near the saturated liquid state. Typically, at the outlet of the condenser 14, a state in which the coolant is on the saturation liquid line is brought about. As result of the result of the condenser 14 having a capability of sufficiently cooling the coolant in this manner, the heat release capability of releasing heat from the coolant in the condenser 14 is higher than the heat release capability of the condenser 15. Since the condenser 14 having relatively large heat release capability sufficiently cools the coolant, the coolant having received heat from the HV appliance heat source 30 can be kept in the wet-vapor state and therefore reduction of the amount of heat exchange between the coolant and the HV appliance heat source 30 can be avoided, so that the HV appliance heat source 30 can be sufficiently efficiently cooled. After the HV appliance heat source 30 is cooled, the coolant in the wet-vapor state is efficiently re-cooled in the condenser 15 until the coolant is cooled to a supercooled liquid state whose temperature is slightly below the saturation temperature. Therefore, it is possible to provide the cooling apparatus 1 that certainly has both the air-cooling capability for the cabin and the cooling capability for the HV appliance heat source 30.

### (THIRD EMBODIMENT)

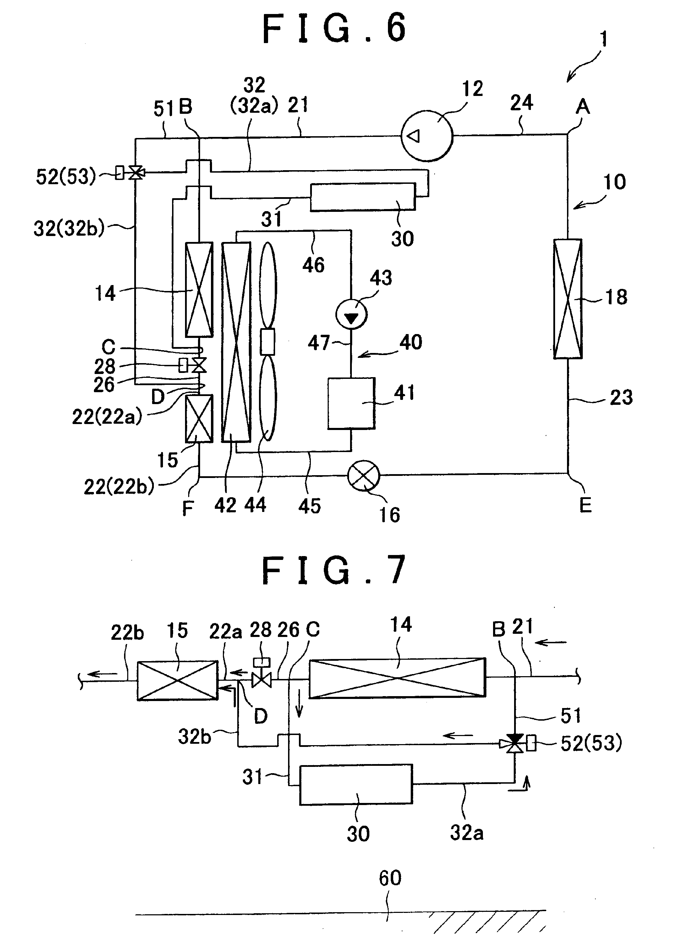

FIG 6 is a schematic diagram showing a construction of a cooling apparatus 1 in accordance with a third embodiment of the invention. The cooling apparatus 1 of the third embodiment is different from that of the second embodiment, in having a communication passageway 51.

Concretely, the communication passageway 51 provides communication between the coolant passageway 21 that conveys the coolant that flows from the outlet of the compressor 12 toward the inlet of the condenser 14, and the coolant passageway 32 that is, of the coolant passageways 31 and 32 that convey the coolant via the HV appliance heat source 30, the one provided at the downstream of the HV appliance heat source 30. The coolant passageway 32 is provided with a switching valve 52 that switches the state of communication between the coolant passageway 32 and the coolant passageways 21 and 22. The switching valve 52 in the third embodiment is a three-way valve 53. The coolant passageway 32 is divided into a coolant passageway 32a at the upstream side of the three-way valve 53 and a coolant passageway 32b at the downstream side of the three-way valve 53.

By changing the open-closed state of the three-way valve 53, the coolant flowing in the coolant passageway 32a after cooling the HV appliance heat source 30 can be caused to flow to the condenser 15 through the coolant passageway 32b, or to flow to the condenser 14 through the coolant passageway 51. By switching the path of the coolant through the use of the three-way valve 53 as an example of the switching valve 52, the coolant, after cooling the HV appliance heat source 30, can be arbitrarily selectively caused to flow through one of the path to the expansion valve 16 through the coolant passageways 32b and 22 and the path to the condenser 14 through the communication passageway 51 and the coolant passageway 21.

FIG. 7 is a schematic diagram showing the flow of the coolant that cools the HV appliance heat source 30 during the operation of the vapor compression type refrigeration cycle 10. While the vapor compression type refrigeration cycle 10 is in operation with the compressor 12 being driven, the valve opening degree of the flow control valve 28 is adjusted so that a sufficient amount of the coolant flows to the HV appliance heat source 30. The three-way valve 53 is operated so as to cause the coolant to flow from the HV appliance heat source 30 to the expansion valve 16 via the condenser 15; thus, the path of the coolant is selected so that the coolant flows in the entire cooling apparatus 1. Therefore, the cooling capability of the vapor compression type refrigeration cycle 10 can be secured, and the HV appliance heat source 30 can be efficiently cooled.

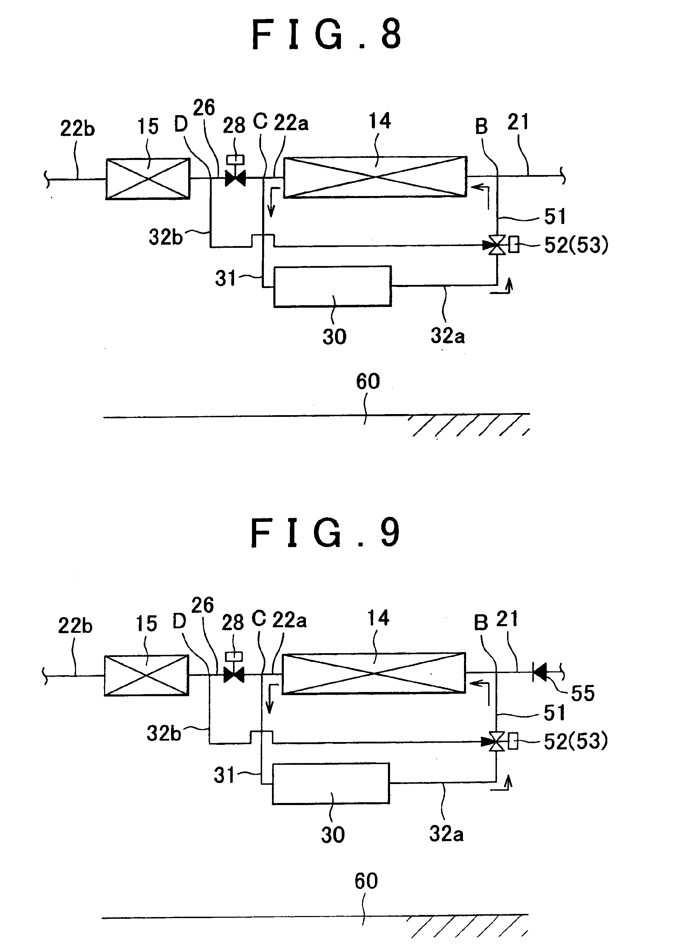

FIG. 8 is a schematic diagram showing the flow of the coolant that cools the HV appliance heat source 30 during a stop of the vapor compression type refrigeration cycle 10. As shown in FIG. 8, when the compressor 12 is stopped and therefore the vapor compression type refrigeration cycle 10 is stopped, the three-way valve 53 is operated so as to circulate the coolant from the HV appliance heat source 30 to the condenser 14, and the flow control valve 28 is completely closed. By causing the coolant to flow through the communication passageway 51, there is formed a closed annular path in which the coolant flows from the condenser 14 to the HV appliance heat source 30 through the coolant passageway 22a and the coolant passageway 31 in that order, and returns from the HV appliance heat source 30 to the condenser 14 through the coolant passageway 32a, the communication passageway 51 and the coolant passageway 21 in that order.

Through this annular path, the coolant can be circulated between the condenser 14 and the HV appliance heat cycle 10 without operating the compressor 12. The coolant, when cooling the HV appliance heat source 30, evaporates by receiving evaporative latent heat from the HV appliance heat source 30. The coolant vapor vaporized at the HV appliance heat source 30 flows to the condenser 14 through the coolant passageway 32a, the communication passageway 51 and the coolant passageway 21 in that order. In the condenser 14, the coolant vapor is cooled to condense by fresh air stream introduced into the traveling vehicle or the ventilation from the radiator fan 44. The coolant liquid liquefied in the condenser 14 returns to the HV appliance heat source 30 through the coolant passageways 22a and 31.

Thus, the annular path that extends via the HV appliance heat source 30 and the condenser 14 forms a heat pipe in which the HV appliance heat source 30 serves as a heating portion and the condenser 14 serves as a cooling portion. Therefore, even when the vapor compression type refrigeration cycle 10 is at a stop, that is, even when the air-cooling for the vehicle is at a stop, the HV appliance heat source 30 can be certainly cooled without a need to activate the compressor 12. Since there is no need to always operate the compressor 12 in order to cool the HV appliance heat source 30, the electric power consumption of the compressor 12 can be reduced and the fuel economy of the vehicle can be improved, and in addition, the service life of the compressor 12 can be increased, so that the reliability of the compressor 12 can be improved.

FIGS. 7 and 8 show a ground surface 60. In a vertical direction perpendicular to the ground surface 60, the HV appliance heat source 30 is disposed below the condenser 14. In the annular path that circulates the coolant between the condenser 14 and the HV appliance heat source 30, the HV appliance heat source 30 is disposed at a relatively low position, and the condenser 14 is disposed at a relatively high position. That is, the condenser 14 is disposed at a higher position than the HV appliance heat source 30.

In this case, the coolant vapor vaporized due to the heating by the HV appliance heat source 30 ascends in the annular path and reaches the condenser 14, in which the coolant is cooled to condense into the liquid coolant. The liquid coolant then descends in the annular path by gravity, and returns to the HV appliance heat source 30. That is, the HV appliance heat source 30, the condenser 14 and the coolant path that links the HV appliance heat source 30 and the condenser 14 form a thermo-siphon type heat pipe. Since the formation of the heat pipe improves the efficiency of heat transfer from the HV appliance heat source 30 to the condenser 14, the HV appliance heat source 30 can be further efficiently cooled without adding power even when the vapor compression type refrigeration cycle 10 is at a stop.

### (FOURTH EMBODIMENT)

FIG 9 is a schematic diagram showing a construction of a cooling apparatus 1 in accordance with a fourth embodiment of the invention. In comparison with the cooling apparatus 1 of the third embodiment shown in FIG. 8, the cooling apparatus 1 of the fourth embodiment has a check valve 55. The check valve 55 is disposed on the coolant passageway 21 between the compressor 12 and the condenser 14, more specifically, at a position on the coolant passageway 21 which is to the compressor 12 side of the connecting portion between the coolant passageway 21 and the communication passageway 51. The check valve 55 allows the flow of the coolant in the direction from the compressor 12 toward the condenser 14, and prohibits the flow of the coolant in the opposite direction.

With this arrangement, a closed-loop path of the coolant in which the coolant is circulated between the condenser 14 and the HV appliance heat source 30 can be certainly formed by completely closing the flow control valve 28 (to a valve opening degree of 0%) and adjusting the three-way valve 53 so that the coolant flows from the coolant passageway 32a to the communication passageway 51, but does not flow to the coolant passageway 32b as shown in FIG. 9.

In the case where the check valve 55 is not provided, there is a risk that the coolant that is to flow from the communication passageway 51 to the coolant passageway 21 may flow to the compressor 12 side. However, the provision of the check valve 55 certainly prohibits the flow of the coolant from the communication passageway 51 to the compressor 12 side, so that it is possible to prevent reduction of the cooling capability for the HV appliance heat source 30 during a stop of the vapor compression type refrigeration cycle 10 that employs the heat pipe formed by the annular coolant path. Therefore, even when the air-cooling for the cabin of the vehicle is at a stop, the HV appliance heat source 30 can be efficiently cooled.

Besides, in the case where, during a stop of the vapor compression type refrigeration cycle 10, the amount of the coolant in the closed-loop coolant path becomes insufficient, the coolant can be supplied to the closed-loop path via the check valve 55 by operating the compression 12 only for a short time. This will increase the amount of the coolant in the closed-loop, and will increase the amount of heat exchange process in the heat pipe. Therefore, the amount of the coolant in the heat pipe can be secured, so that it is possible to avoid an event in which the cooling of the HV appliance heat source 30 becomes insufficient due to insufficient amount of the coolant.

### (FIFTH EMBODIMENT)

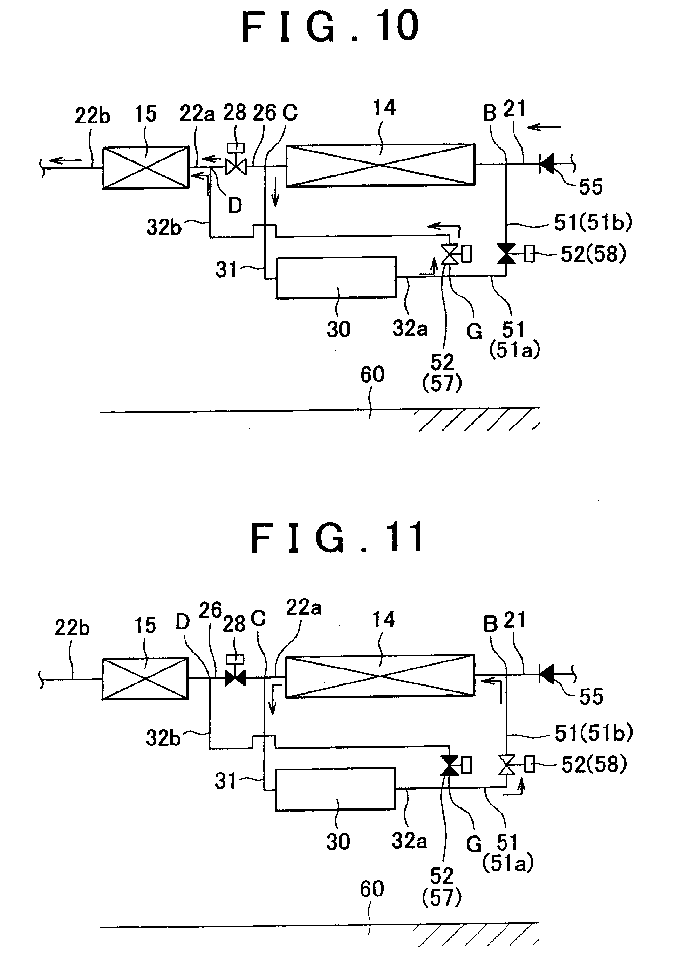

FIG. 10 is a schematic diagram showing a construction of a cooling apparatus 1 in accordance with a fifth embodiment of the invention. FIG 10 shows the flow of the coolant that cools the HV appliance heat source 30 while the vapor compression type refrigeration cycle 10 is in operation. FIG. 11 is a schematic diagram showing the cooling apparatus 1 of the fifth embodiment. FIG 11 shows the flow of the coolant that cools the HV appliance heat source 30 during a stop of the vapor compression type refrigeration cycle 10. In comparison with the construction shown in FIGS. 7 and 8, the cooling apparatus 1 of the fifth embodiment is provided with two valves 57 and 58 instead of the three-way valve 53 as the switch valve 52.

As shown in FIG. 10, during the operation of the vapor compression type refrigeration cycle 10, the valve 57 is fully opened (to an opening valve degree of 100%) and the valve 58 is completely closed (to an opening valve degree of 0%). In this manner, the valve opening degree of the flow control valve 28 is adjusted so that a sufficient amount of the coolant flows to the HV appliance heat source 30. As a result, it is possible to cause the coolant, after cooling the HV appliance heat source 30, to certainly flow to the condenser 15 through the coolant passageways 32a, 32b and 22a. On the other hand, as shown in FIG. 11, when the vapor compression type refrigeration cycle 10 is at a stop, the valve 58 is fully opened, and the valve 57 is completely closed, and furthermore the flow control valve 28 is completely closed. As a result, there is formed an annular path that circulates the coolant between the HV appliance heat source 30 and the condenser 14.

Thus, the switching valve 52 that switches the state of communication between the coolant passageway 32 and the coolant passageways 21 and 22 may be the three-way valve 53, or may also be the pair of valves 57 and 58. In either case, both during the operation of the vapor compression type refrigeration cycle 10 and during the stop thereof, the HV appliance heat source 30 can be efficiently cooled.

The valves 57 and 58 need only to have a simple structure that is able to open and close a coolant passageway, and therefore are inexpensive. The use of the two valves 57 and 58 instead of the three-way valve 53 will provide a more inexpensive cooling apparatus 1. On the other hand, the three-way valve 53 is considered to take up a smaller space for installation than the two valves 57 and 58. Therefore, the use of the three-way valve 53 will provide a cooling apparatus 1 that is further reduced in size and is therefore excellent in the vehicle mountability.

Incidentally, the first to fifth embodiments are described above in conjunction with the cooling apparatuses 1 that each cool an electrical appliance mounted in a vehicle, for example, the HV appliance heat source 30. The electrical appliance is not limited to the electrical appliances shown above as examples, such as inverts, motor-generators, etc., but may be any electrical appliance as long as the electrical appliance at least generates heat when operated. In the case where the object to be cooled includes a plurality of electrical appliances, it is desirable that those electrical appliances have a common range of target temperature for cooling. The range of target cooling temperature is an appropriate temperature range as a temperature environment in which the electrical appliances are operated.

Furthermore, the heat generation source to be cooled by the cooling apparatus 1 in accordance with the invention is not limited to the electrical appliances mounted in a vehicle, but may be any appliance that generates heat, or a heat-generating portion of any appliance.

While what are considered to be the preferred embodiments of the invention have been described above, constructions of the individual embodiments may be combined as appropriate. Besides, it is to be understood that the embodiments disclosed herein are mere illustration in all respects, and not restrictive at all. The scope of the invention is shown not by the foregoing description but by the appended claims, and is intended to encompass meanings equivalent to the claims and all modifications and changes within the scope of the invention.

The cooling apparatus of the invention is particularly advantageously applicable to the cooling of an electrical appliance that employs a vapor compression type refrigeration cycle for the air-cooling of a cabin of a vehicle equipped with electrical appliances such as a motor-generator, an inverter, etc., for example, a hybrid vehicle, a fuel-cell vehicle, an electric vehicle, etc.

## Claims

1. A cooling apparatus (1) that cools a heat generation source (30), **characterized by** comprising:
a compressor (12) that circulates a coolant;
a condenser (14) that condenses the coolant;
a decompressor (16) that decompresses the coolant that has been condensed by the condenser (14);
an evaporator (18) that evaporates the coolant that has been decompressed by the decompressor (16);
a first passageway (22) through which the coolant that moves from an outlet of the condenser (14) toward an inlet of the decompressor (16) flows, and which includes a passageway-forming portion (26) that forms a portion of the first passageway (22), and
a second passageway (31,32) which is connected in parallel with the passageway-forming portion (26), and which is provided with the heat generation source (30), and in which the coolant flows via the heat generation source (30).

2. The cooling apparatus (1) according to claim 1, further comprising
a flow control valve (28) that is disposed on the passageway-forming portion (26) and that adjusts amount of flow of the coolant flowing through the passageway-forming portion (26) and the amount of flow of the coolant flowing through the second passageway (31,32).

3. The cooling apparatus (1) according to claim 1 or 2, further comprising:
a third passageway (51) through which the coolant that moves from an outlet of the compressor (12) toward an inlet of the condenser (14) flows; and
a communication passageway that provides communication between the third passageway (51) and a downstream side of the second passageway (31,32) relative to the heat generation source (30).

4. The cooling apparatus (1) according to claim 3, further comprising
a switching valve (52) that switches state of communication between the downstream side of the second passageway (31,32) relative to the heat generation source (30) and each of the first passageway (22) and the third passageway (51).

5. The cooling apparatus (1) according to claim 3 or 4, wherein the heat generation source (30) is disposed below the condenser (14).

6. The cooling apparatus (1) according to any one of claims 1 to 5, further comprising
another condenser (15) disposed on the first passageway, wherein
the passageway-forming portion (26) is provided between the condenser (14) and the another condenser (15).

7. The cooling apparatus (1) according to claim 6, wherein
the condenser (14) is higher in heat release capability of releasing heat from the coolant than the another condenser (15).

8. The cooling apparatus (1) according to claim 3, further comprising
a fan (44) that blows air to the condenser (14).

## Patentansprüche

1. Kühlvorrichtung (1), welche eine Wärmeerzeugungsquelle (30) kühlt, **dadurch gekennzeichnet, dass** sie umfasst:
einen Kompressor (12), der ein Kältemittel zirkulieren lässt,
einen Kondensator (14), der das Kältemittel kondensiert,
einen Dekompressor (16), der das Kältemittel, welches durch den Kondensator (14) kondensiert wurde, dekomprimiert,
einen Verdampfer (18), der das Kältemittel, welches durch den Dekompressor (16) dekomprimiert wurde, verdampft,
einen ersten Durchgang (22), durch welchen das Kältemittel, das sich von einem Auslass der Kondensators (14) zu einem Einlass des Dekompressors (16) bewegt, strömt, und welcher einen durchgangbildenden Abschnitt (26) umfasst, der einen Abschnitt des ersten Durchgangs (22) bildet, und
einen zweiten Durchgang (31, 32), welcher mit dem durchgangbildenden Abschnitt (26) parallel geschaltet ist und welcher mit der Wärmeerzeugungsquelle (30) versehen ist, und in welchem das Kältemittel über die Wärmeerzeugungsquelle (30) strömt.

2. Kühlvorrichtung (1) nach Anspruch 1, ferner umfassend:
ein Stromregelventil (28), das an dem durchgangbildenden Abschnitt (26) angeordnet ist und das die Durchsatzmenge des Kältemittels, welches durch den durchgangbildenden Abschnitt (26) strömt, und die Durchsatzmenge des Kältemittels, welches durch den zweiten Durchgang (31, 32) strömt, einstellt.

3. Kühlvorrichtung (1) nach Anspruch 1 oder 2, ferner umfassend:
einen dritten Durchgang (51), durch welchen das Kältemittel, welches sich von einem Auslass des Kompressors (12) in Richtung eines Einlasses des Kondensators (14) bewegt, strömt, und
einen Kommunikationsdurchgang, der für Kommunikation zwischen dem dritten Durchgang (51) und einer stromabwärtigen Seite des zweiten Durchgangs (31, 32) relativ zu der Wärmeerzeugungsquelle (30) sorgt.

4. Kühlvorrichtung (1) nach Anspruch 3, ferner umfassend:
ein Schaltventil (52), welches den Zustand der Kommunikation zwischen der stromabwärtigen Seite des zweiten Durchgangs (31, 32) relativ zu der Wärmeerzeugungsquelle (30) und jedem aus der Gruppe umfassend den ersten Durchgang (22) und den dritten Durchgang (51) umschaltet.

5. Kühlvorrichtung (1) nach Anspruch 3 oder 4, wobei die Wärmeerzeugungsquelle (30) unter dem Kondensator (14) angeordnet ist.

6. Kühlvorrichtung (1) nach einem beliebigen der Ansprüche 1 bis 5, ferner umfassend:
einen weiteren Kondensator (15), der an dem ersten Durchgang angeordnet ist, wobei
der durchgangbildende Abschnitt (26) zwischen dem Kondensator (14) und dem anderen Kondensator (15) vorgesehen ist.

7. Kühlvorrichtung (1) nach Anspruch 6, wobei der Kondensator (14) ein höheres Wärmeabgabevermögen zum Abgeben von Wärme von dem Kältemittel als der weitere Kondensator (15) aufweist.

8. Kühlvorrichtung (1) nach Anspruch 3, ferner umfassend:
einen Ventilator (44), der Luft zu dem Kondensator (14) bläst.

## Revendications

1. Équipement de refroidissement (1) qui refroidit une source (30) de production de chaleur, **caractérisé en ce qu'**il comprend :
un compresseur (12) qui fait circuler un agent réfrigérant ;
un condensateur (14) qui condense l'agent réfrigérant ;
un détendeur (16) qui détend l'agent réfrigérant qui a été condensé par le condensateur (14) ;
un évaporateur (18) qui évapore l'agent réfrigérant qui a été détendu par le détendeur (16) ;
un premier conduit (22) par lequel s'écoule l'agent réfrigérant qui va d'un orifice de sortie du condensateur (14) vers un orifice d'entrée du détendeur (16), et qui inclut une partie formant conduit (26) qui forme une partie du premier conduit (22) ; et
un deuxième conduit (31, 32) qui est raccordé en parallèle à la partie formant conduit (26), et qui est pourvu de la source (30) de production de chaleur, et dans lequel s'écoule l'agent réfrigérant via la source (30) de production de chaleur.

2. Équipement de refroidissement (1) selon la revendication 1, comprenant en outre une vanne (28) de commande de débit qui est disposée sur la partie formant conduit (26) et qui règle le débit de l'agent réfrigérant s'écoulant dans la partie formant conduit (26) et le débit de l'agent réfrigérant s'écoulant dans le deuxième conduit (31, 32).

3. Équipement de refroidissement (1) selon la revendication 1 ou 2, comprenant en outre :
un troisième conduit (51) par lequel s'écoule l'agent réfrigérant qui va d'un orifice de sortie du compresseur (12) vers un orifice d'entrée du condensateur (14) ; et
un conduit de communication qui réalise une communication entre le troisième conduit (51) et le côté aval du deuxième conduit (31, 32) par rapport à la source (30) de production de chaleur.

4. Équipement de refroidissement (1) selon la revendication 3, comprenant en outre une vanne (52) de permutation qui change l'état de communication entre le côté aval du deuxième conduit (31, 32) par rapport à la source (30) de production de chaleur et chacun du premier conduit (22) et du troisième conduit (51).

5. Équipement de refroidissement (1) selon la revendication 3 ou 4, dans lequel la source (30) de production de chaleur est disposée sous le condensateur (14).

6. Équipement de refroidissement (1) selon l'une quelconque des revendications 1 à 5, comprenant en outre :
un autre condensateur (15) disposé sur le premier conduit,
la partie formant conduit (26) étant placée entre le condensateur (14) et l'autre condensateur (15).

7. Équipement de refroidissement (1) selon la revendication 6, dans lequel le condensateur (14) a une capacité de libération de chaleur pour libérer de la chaleur provenant de l'agent réfrigérant qui est plus élevée que celle de l'autre condensateur (15).

8. Équipement de refroidissement (1) selon la revendication 3, comprenant en outre un ventilateur (44) qui souffle de l'air sur le condensateur (14).
